# EUROPEAN PATENT SPECIFICATION

(11) **EP 2 884 080 B1**
(45) Date of publication and mention of the grant of the patent: **21.06.2017**
(21) Application number: 14195499.0
(22) Date of filing: 28.11.2014
(51) Int. Cl.: F02D 35/02, F02D 41/40, F02D 41/14

(54) **Control device for internal combustion engine**
Steuerungsvorrichtung für einen Verbrennungsmotor
Dispositif de contrôle pour moteur à combustion interne

(30) Priority: 02.12.2013 JP 2013249519
(43) Date of publication of application: 17.06.2015
(73) Proprietor: Toyota Jidosha Kabushiki Kaisha, Toyota-shi, Aichi-ken 471-8571 (JP); KABUSHIKI KAISHA TOYOTA JIDOSHOKKI, Kariya-shi, Aichi-ken, 448-8671 (JP)
(72) Inventor: Aoyama, Yukitoshi, TOYOTA-SHI, AICHI-KEN, 471-8571 (JP); Hasegawa, Ryo, TOYOTA-SHI, AICHI-KEN, 471--8571 (JP); Sakurai, Sho, KARIYA-SHI, AICHI-KEN, 448-8671 (JP)
(74) Representative: Intès, Didier Gérard André

(56) References cited:
- EP-A1- 1 496 237
- EP-A2- 0 657 729
- DE-A1-102011 018 270
- JP-A- 2007 278 098

## Description

### BACKGROUND OF THE INVENTION

### Field of the Invention

The present invention relates to a control device for an internal combustion engine, and more particularly to a control device that is suitable for executing control of an internal combustion engine that is mounted in a vehicle.

### Background Art

Combustion noise sometimes arises in an internal combustion engine due to variations in fuel injection amounts or fuel injection timings that are caused by fuel injection valves. Patent Literature 1 discloses technology that calculates combustion noise using a plurality of indices (maximum value of a first-order time differential value of an increased amount of in-cylinder pressure, maximum value of a second-order time differential value of an increased amount of in-cylinder pressure and the like) relating to combustion noise in an internal combustion engine. Patent Literature 1 also discloses that an index component for which a degree of correlation with combustion noise is highest among the plurality of indices is selected, and fuel injection control is executed so as to lower the relevant component.

The applicants are aware of the following literature, which includes EP1496237A1, EP0657729A2 and the above described literature, as literature related to the present invention.

### Citation List

### Patent Literature

Patent Literature 1: Japanese Patent Laid-Open No. 2007-278098
Patent Literature 2: Japanese Patent Laid-Open No. 2007-016777
Patent Literature 3: Japanese Patent Laid-Open No. 2012-154244
Patent Literature 4: Japanese Patent Laid-Open No. 2006-233839

### Summary of the Invention

It is known that dP/dt that is a time differential of the in-cylinder pressure and dP/dθ that is a crank angle differential have a correlation with combustion noise. In general, it can be determined that noise is occurring if these indices exceed a predetermined value.

In this connection, since the output value of an in-cylinder pressure sensor is affected by noise of a large current that flows in a driving circuit of a fuel injection valve as well as by noise of a high frequency component that cannot be removed completely even when a low-pass filter is used, there are large variations in in-cylinder pressure differential values. Hence, in a case where the maximum value of an in-cylinder pressure differential value is used as an index of combustion noise as in Patent Literature 1, it is necessary to acquire maximum values over a plurality of cycles and determine the level of combustion noise using an average value of the maximum values. However, in such case, the level of combustion noise cannot be estimated in a timely manner when the vehicle in question is actually travelling, in particular, when the vehicle is in an operating state such as a state at a transient time. Consequently, it is difficult to execute control that suppresses combustion noise with a high level of responsiveness. Therefore, a combustion noise index that has a strong correlation with combustion noise which allows combustion noise to be estimated with a high degree of accuracy in a more timely manner is desired.

The present invention has been conceived to solve the above described problems, and an object of the present invention is to provide a control device for an internal combustion engine that can calculate a combustion noise index that has a strong correlation with combustion noise based on information of one cycle, and can execute control that suppresses combustion noise with a high level of responsiveness.

### Solution to Problem

A first aspect of the invention is a control device for an internal combustion engine, comprising:
in-cylinder pressure acquisition means for acquiring an in-cylinder pressure for each time period or for each crank angle;
in-cylinder pressure change rate calculation means for calculating an in-cylinder pressure change rate that is an amount of increase in an in-cylinder pressure per unit time or unit crank angle based on each in-cylinder pressure that is acquired by the in-cylinder pressure acquisition means in a combustion period during one cycle;
integrated value calculation means for calculating an integrated value by integrating in-cylinder pressure change rates that are equal to or greater than a noise threshold value that is equal to or greater than 0 or is a negative value close to 0 with respect to each in-cylinder pressure change rate that is calculated by the in-cylinder pressure change rate calculation means; and
combustion noise suppression control means for executing control that suppresses combustion noise based on an integrated value that is calculated by the integrated value calculation means.

A second aspect of the invention is the control device for an internal combustion engine according to the first aspect, wherein the noise threshold value is greater than 0.

A third aspect of the invention is the control device for an internal combustion engine according to the first or second aspects, further comprising:
multi-stage injection means for dividing a total fuel injection amount that a fuel injection valve is caused to inject during one cycle into at least an amount injected by a main injection and an amount injected by a pilot injection that is prior to the main injection;
wherein the integrated value calculation means includes:
   first integrated value calculation means for calculating a first integrated value that is obtained by, with respect to each in-cylinder pressure change rate that is calculated by the in-cylinder pressure change rate calculation means in a combustion period corresponding to the pilot injection, integrating in-cylinder pressure change rates that are equal to or greater than the noise threshold value; and
   second integrated value calculation means for calculating a second integrated value that is obtained by, with respect to each in-cylinder pressure change rate that is calculated by the in-cylinder pressure change rate calculation means in a combustion period corresponding to the main injection, integrating in-cylinder pressure change rates that are equal to or greater than the noise threshold value.

A fourth aspect of the invention is the control device for an internal combustion engine according to the third aspect, wherein the combustion noise suppression control means includes pilot injection proportion reduction means for, in a case where the first integrated value is greater than the second integrated value, reducing an injection sharing proportion of the pilot injection by the multi-stage injection means in subsequent cycles.

A fifth aspect of the invention is the control device for an internal combustion engine according to the third or fourth aspect, wherein the combustion noise suppression control means includes pilot injection proportion enlargement means for, in a case where the first integrated value is less than or equal to the second integrated value, increasing an injection sharing proportion of the pilot injection by the multi-stage injection means in subsequent cycles.

A sixth aspect of the invention is the control device for an internal combustion engine according to the third aspect, wherein the combustion noise suppression control means includes:
fuel pressure reduction means for reducing a pressure of fuel that is supplied to the fuel injection valve in a case where a determination condition is established when the first integrated value is greater than a first threshold value and the second integrated value is greater than a second threshold value;
pilot injection proportion reduction means for, in a case where the determination condition is not established and the first integrated value is larger than the second integrated value, reducing an injection sharing proportion of the pilot injection by the multi-stage injection means in subsequent cycles; and
pilot injection proportion enlargement means for, in a case where the determination condition is not established and the first integrated value is less than or equal to the second integrated value, increasing an injection sharing proportion of the pilot injection by the multi-stage injection means in subsequent cycles.

A seventh aspect of the invention is the control device for an internal combustion engine according to the third aspect, wherein the combustion noise suppression control means includes:
pilot injection proportion reduction means for, in a case where the first integrated value is greater than a first threshold value and the second integrated value is less than or equal to a second threshold value, reducing an injection sharing proportion of the pilot injection by the multi-stage injection means in subsequent cycles.

An eighth aspect of the invention is the control device for an internal combustion engine according to the third or seventh aspect, wherein the combustion noise suppression control means includes:
pilot injection proportion enlargement means for, in a case where the first integrated value is less than or equal to a first threshold value and the second integrated value is greater than a second threshold value, increasing an injection sharing proportion of the pilot injection by the multi-stage injection means in subsequent cycles.

A ninth aspect of the invention is the control device for an internal combustion engine according to the third aspect, wherein the combustion noise suppression control means includes:
fuel pressure reduction means for, in a case where the first integrated value is greater than a first threshold value and the second integrated value is greater than a second threshold value, reducing a pressure of fuel that is supplied to the fuel injection valve;
pilot injection proportion reduction means for, in a case where the first integrated value is greater than the first threshold value and the second integrated value is less than or equal to the second threshold value, reducing an injection sharing proportion of the pilot injection by the multi-stage injection means in subsequent cycles; and
pilot injection proportion enlargement means for, in a case where the first integrated value is less than or equal to the first threshold value and the second integrated value is greater than the second threshold value, increasing an injection sharing proportion of the pilot injection by the multi-stage injection means in subsequent cycles.

A tenth aspect of the invention is the control device for an internal combustion engine according to any one of the third to ninth aspect, further comprising:
determination means for determining that a determination condition is established in a case where an in-cylinder pressure change rate that is calculated by the in-cylinder pressure change rate calculation means changes to a positive value after becoming a negative value in a combustion period during one cycle;
wherein:
   in a case where the determination condition is not established, the first integrated value calculation means calculates the first integrated value by taking a period from a combustion start timing until a first inflection point as a combustion period that corresponds to the pilot injection; and
   in a case where the determination condition is not established, the second integrated value calculation means calculates the second integrated value by taking a period from the first inflection point until a combustion end timing as a combustion period that corresponds to the main injection.

### Advantageous Effects of Invention

According to the first aspect of the invention, an integrated value is calculated in which in-cylinder pressure change rates that are equal to or greater than a noise threshold value that is equal to or greater than 0 or is a negative value close to 0 are integrated based on respective in-cylinder pressure change rates in a combustion period during one cycle. The integrated value can be used as a combustion noise index. Therefore, according to the first aspect, a combustion noise index that has a strong correlation with combustion noise can be calculated based on the information of one cycle, and control can be executed that suppresses combustion noise with a high level of responsiveness.

According to the second aspect, the noise threshold value is set to a value that is greater than 0. By setting the noise threshold value to a positive value, an integrated value of portions at which the in-cylinder pressure change rate is high (influence on combustion noise is large) and from which portions at which the in-cylinder pressure change rate is low (influence on combustion noise is small) are removed can be made a combustion noise index. As a result, a combustion noise index that has a strong correlation with a region in which combustion noise becomes a problem can be obtained.

According to the third aspect, a highly accurate combustion noise index can be calculated in one cycle with respect to combustion noise of pilot combustion that is caused by a pilot injection and combustion noise of main combustion that is caused by a main injection, respectively.

According to the fourth to sixth aspects, control that appropriately suppresses combustion noise can be executed in accordance with a magnitude relationship between a first integrated value (combustion noise index of pilot combustion) and a second integrated value (combustion noise index of main combustion).

According to the seventh to ninth aspects, control that appropriately suppresses combustion noise can be executed in accordance with a combination of a magnitude relationship between a first integrated value and a first threshold value and a magnitude relationship between a second integrated value and a second threshold value.

According to the tenth aspect, in an internal combustion engine in which multi-stage injection is performed, even in a case where it is difficult to isolate a pilot combustion and a main combustion, the respective combustions can be isolated and combustion noise indices can be calculated.

### Brief Description of Drawings

Fig. 1 is a view for describing a system configuration according to a first embodiment of the present invention.
Fig. 2 is a view that illustrates the relationship between a crank angle and an in-cylinder pressure change rate in a compression stroke and an expansion stroke.
Fig. 3 is a view that illustrates a relation between an integrated value obtained by integrating in-cylinder pressure change rates that are equal to or greater than a noise threshold value, and the crank angle with respect to Fig. 2.
Fig. 4 illustrates the distribution of results obtained by detecting relations between a maximum value of an in-cylinder pressure change rate and combustion noise in respective cycles with respect to various operating states.
Fig. 5 illustrates the distribution of results obtained by detecting a relation between an integrated value of the in-cylinder pressure change rate and the combustion noise in respective cycles with respect to various operating states.
Fig. 6 is a flowchart of a processing routine that is executed by the ECU 50 according to a first embodiment of the present invention.
Fig. 7 is a view that illustrates the relation between the crank angle and the in-cylinder pressure change rate in a compression stroke and an expansion stroke.
Fig. 8 is a view that, with respect to Fig. 7, illustrates the relation between an integrated value obtained by integrating in-cylinder pressure change rates that are equal to or greater than a noise threshold value and the crank angle.
Fig. 9 is a view for describing control that suppresses combustion noise according to a second embodiment of the present invention.
Fig. 10 is a flowchart of a processing routine that is executed by the ECU 50 according to the second embodiment of the present invention.
Fig. 11 is a flowchart of a processing routine that is executed by the ECU 50 according to a third embodiment of the present invention.
Fig. 12 is a view that illustrates a relation between an in-cylinder pressure change rate and a crank angle in a case in which it is difficult to isolate the pilot combustion and the main combustion.
Fig. 13 is a flowchart of a processing routine that is executed by the ECU 50 according to a fourth embodiment of the present invention.

### Best Modes of Carrying Out the Invention

Hereunder, embodiments of the present invention are described in detail with reference to the attached drawings. Note that elements that are common to the respective drawings are denoted by the same reference symbols, and a duplicate description thereof is omitted.

### First Embodiment

### [System configuration of first embodiment]

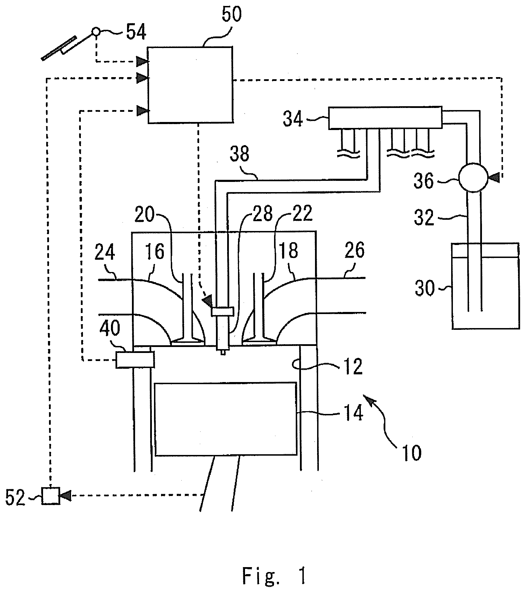

Fig. 1 is a view for describing a system configuration according to a first embodiment of the present invention. Fig. 1 illustrates a schematic configuration of an internal combustion engine 10 and a fuel system thereof according to the first embodiment of the present invention. The internal combustion engine 10 is a diesel engine for driving a vehicle that has four cylinders 12. A piston 14 is slidably provided inside each cylinder 12 of the internal combustion engine 10. Note that the number of cylinders is not limited to four in the present invention.

An intake port 16 and an exhaust port 18 are connected to a combustion chamber at an upper portion inside each cylinder 12. An opening portion to the combustion chamber of the intake port 16 is opened and closed by means of an intake valve 20. An opening portion to the combustion chamber of the exhaust port 18 is opened and closed by means of an exhaust valve 22. The intake port 16 is connected to an intake passage 24. The exhaust port 18 is connected to an exhaust passage 26. A fuel injection valve 28 that injects fuel directly into the cylinder 12 is also provided in each cylinder 12.

A fuel tank 30 is also installed in the internal combustion engine 10. One end of a fuel supply pipe 32 is inserted into the fuel tank 30. The other end of the fuel supply pipe 32 is connected to a common-rail fuel-injection system 34. A fuel pump 36 that pumps fuel from the fuel tank 30 to the common-rail fuel-injection system 34 is provided in the fuel supply pipe 32. One end of each of four fuel supply branch pipes 38 is connected to the common-rail fuel-injection system 34. Pressurized fuel is fed to the fuel injection valve 28 through the fuel supply branch pipe 38 from the common-rail fuel-injection system 34, and is injected from the fuel injection valve 28.

An in-cylinder pressure sensor (combustion pressure sensor) 40 for detecting a pressure inside the respective cylinders 12 is provided in the internal combustion engine 10. The in-cylinder pressure sensor 40 is capable of acquiring an in-cylinder pressure at each predetermined time period or each predetermined crank angle.

The system of the present embodiment includes an ECU (Electronic Control Unit) 50. The ECU 50 is constituted, for example, by an arithmetic processing apparatus that has a storage circuit that includes a ROM, a RAM and the like.

In addition to the aforementioned in-cylinder pressure sensor 40, various sensors that detect the operating state of the internal combustion engine 10 such as a crank angle sensor 52 that detects a crank angle of the internal combustion engine 10 and a degree of accelerator opening sensor that detects a degree of accelerator opening of a vehicle in which the internal combustion engine 10 is mounted are connected via electric wiring to an input portion of the ECU 50. Output signals from these sensors are input to the ECU 50.

Various actuators for controlling the operating state of the internal combustion engine 10, such as the aforementioned fuel injection valve 28 and fuel pump 36, are connected via electric wiring to an output portion of the ECU 50.

The ECU 50 executes a predetermined program based on information inputted from the various sensors to actuate the various actuators and thereby control the operating state of the internal combustion engine 10. For example, a crank angle or a rotational speed is calculated based on an output signal of the crank angle sensor 52. A fuel injection amount is calculated based on an output signal of the degree of accelerator opening sensor 54. Further, the operating state of the internal combustion engine 10 is calculated based on output signals of the various sensors, and a rail pressure of the common-rail fuel-injection system 34 or a reference value for the fuel injection timing of the fuel injection valve 28 that is suitable for the operating state are calculated.

### [Characteristic configuration in first embodiment]

### (Combustion noise index)

Next, calculation of a combustion noise index in the first embodiment of the present invention is described.

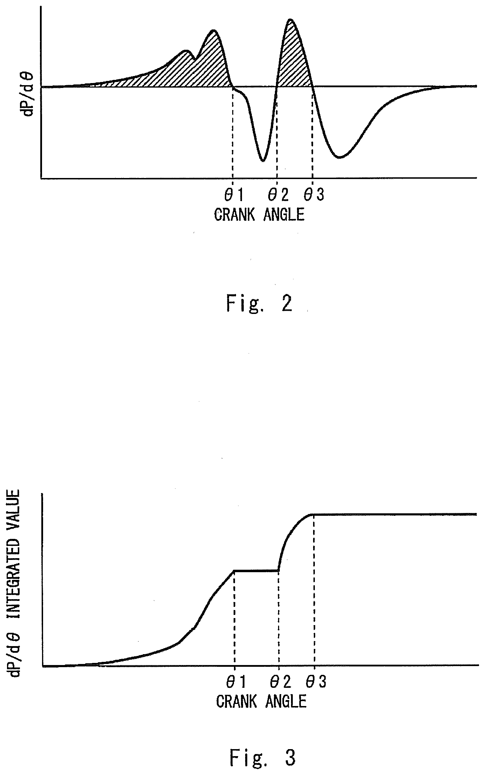

Fig. 2 is a view that illustrates the relationship between a crank angle and an in-cylinder pressure change rate in a compression stroke and an expansion stroke. The in-cylinder pressure change rate is an amount of increase (dP/dθ) per unit crank angle in the in-cylinder pressure that is detected by the in-cylinder pressure sensor 40, that is, an angle differential value of the in-cylinder pressure. Note that, the in-cylinder pressure change rate may also be an amount of increase (dP/dt) per unit time in the in-cylinder pressure, that is, a time differential value of the in-cylinder pressure. The in-cylinder pressure change rate becomes a positive value during a process in which the in-cylinder pressure rises, and becomes a negative value during a process in which the in-cylinder pressure falls.

Fig. 3 is a view that illustrates a relation between an integrated value obtained by integrating in-cylinder pressure change rates that are equal to or greater than a noise threshold value, and the crank angle with respect to Fig. 2. Fig. 3 is an example in a case where the noise threshold value is taken as 0. As shown in Fig. 3, in the system of the present embodiment an integrated value obtained by integrating in-cylinder pressure change rates that are equal to or greater than a noise threshold value in a combustion period during one cycle is used as a combustion noise index. It is preferable to focus attention on combustion and therefore set the noise threshold value to a value that is greater than 0. By making the noise threshold value a positive value, an integrated value for portions in which the in-cylinder pressure change rate is high (influence on combustion noise is large) and from which portions in which the in-cylinder pressure change rate is low (influence on combustion noise is small) are removed can be made the combustion noise index. As a result, a combustion noise index that has a strong correlation with a region in which combustion noise becomes a problem can be obtained.

Note that, the noise threshold value may also be a negative value close to 0. By using an integrated value of the in-cylinder pressure change rate even when the noise threshold value is a negative value close to 0, it is possible to calculate a combustion noise index with respect to which variations are small and which has a strong correlation with combustion noise.

The characteristic configuration in the first embodiment will now be described in more detail. The ECU 50 of the present embodiment includes an in-cylinder pressure change rate calculation portion, an integrated value calculation portion and a combustion noise suppression control portion.

The in-cylinder pressure change rate calculation portion calculates an in-cylinder pressure change rate that is an amount of increase in the in-cylinder pressure per unit time or unit crank angle based on each in-cylinder pressure detected by the in-cylinder pressure sensor 40 in a combustion period during one cycle. Note that, the combustion period is a period from the combustion start timing until the combustion end timing and is included in a period from a compression stroke to an expansion stroke.

The integrated value calculation portion calculates an integrated value by integrating in-cylinder pressure change rates that are equal to or greater than a noise threshold value that is equal to or greater than 0 or is a negative value close to 0 with respect to each in-cylinder pressure change rate calculated by the in-cylinder pressure change rate calculation portion. Preferably, the noise threshold value is set to a value that is greater than 0. In the system of the present embodiment, by using the aforementioned integrated value as a combustion noise index, it is possible to estimate the level of combustion noise with a high degree of accuracy during one cycle, even in a case where noise is included in a waveform of the in-cylinder pressure change rate. Further, since the combustion noise index can be detected based on information obtained during one cycle, it is possible to estimate the combustion noise with a high degree of accuracy at a transient time also.

The combustion noise suppression control portion executes control that suppresses combustion noise based on the integrated value calculated by the integrated value calculation portion. As one example of control that suppresses combustion noise, in a case where the integrated value is larger than a set value, the rail pressure of the common-rail fuel-injection system 34 can be decreased or the fuel injection timing of the fuel injection valve 28 can be changed.

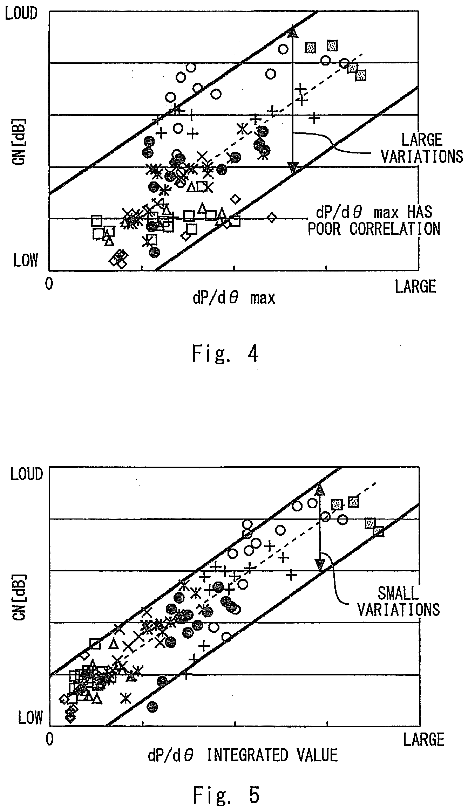

In this connection, in recent years, to comply with exhaust emission regulations and the like, multi-stage injection is performed that injects a total fuel injection amount during one cycle by dividing the fuel injection operation into a plurality of separate injection operations. The fact that the combustion noise index proposed in the present embodiment has a noticeable effect in the case of performing multi-stage injection also will now be described using Fig. 4 and Fig. 5.

Fig. 4 and Fig. 5 are views for describing a tendency of combustion noise in an internal combustion engine that performs multi-stage injection. Fig. 4 illustrates the distribution of results obtained by detecting relations between a maximum value of an in-cylinder pressure change rate and combustion noise in respective cycles with respect to various operating states. Fig. 4 illustrates experimental results with respect to a comparison object, in which a maximum value of the in-cylinder pressure change rate is taken as the combustion noise index. Fig. 5 illustrates the distribution of results obtained by detecting a relation between an integrated value of the in-cylinder pressure change rate and the combustion noise in respective cycles with respect to various operating states. Fig. 5 illustrates experimental results of the present embodiment, in which an integrated value obtained by integrating in-cylinder pressure change rates that are equal to or greater than a noise threshold value as described above is taken as the combustion noise index.

Although it is already known that the in-cylinder pressure change rate has a correlation with combustion noise, the combustion process is complex in internal combustion engines of recent years that perform multi-stage injection and, as shown in Fig. 4, there are large variations in the relation between the maximum value of the in-cylinder pressure change rate and combustion noise, and it cannot be said that there is a strong correlation therebetween.

In comparison thereto, as shown in Fig. 5, variations in the relation between an integrated value of in-cylinder pressure change rates that are equal to or greater than a noise threshold value and combustion noise are small compared to the comparison object shown in Fig. 4, and it can be said that there is a strong correlation with combustion noise. Accordingly, it can be said that, compared to the comparison object shown in Fig. 4, the combustion noise index proposed in the present embodiment is a preferable index for an internal combustion engine that performs multi-stage injection in which the combustion process is complex.

### (Flowchart)

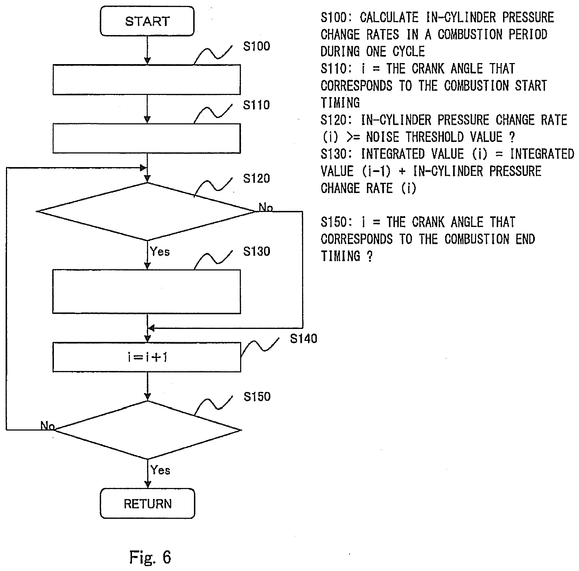

Fig. 6 is a flowchart of a processing routine that the ECU 50 executes to calculate the above described combustion noise index. The ECU 50 executes the present routine for each cycle.

In step S100, the ECU 50 calculates in-cylinder pressure change rates in a combustion period during one cycle. More specifically, first, the ECU 50 acquires the in-cylinder pressure for each crank angle based on output signals of the in-cylinder pressure sensor 40 and the crank angle sensor 52. The combustion period is a period from the combustion start timing until the combustion end timing and is included in a period from a compression stroke to an expansion stroke. The ECU 50 calculates an in-cylinder pressure change rate that is an amount of increase in the in-cylinder pressure per unit crank angle based on the in-cylinder pressure at each crank angle for the combustion period. The in-cylinder pressure change rate is a positive value in a case where the in-cylinder pressure rises, and is a negative value in a case where the in-cylinder pressure falls. Crank angles that correspond to the combustion start timing and the combustion end timing are previously stored in the ECU 50.

In step S110, the ECU 50 sets the crank angle that corresponds to the combustion start timing as an initial value of a variable i. The variable i is a counter value that is incremented by 1 for each unit crank angle for which the in-cylinder pressure change rate is calculated.

In step S120, the ECU 50 determines whether or not the in-cylinder pressure change rate (i) is equal to or greater than a noise threshold value. The noise threshold value is set to a predetermined value that is equal to or greater than 0, or to a predetermined value close to 0. Preferably, the noise threshold value is set to a value that is greater than 0. Note that the noise threshold value may also be a negative value that is close to 0. If the ECU 50 determines that the in-cylinder pressure change rate (i) is equal to or greater than the noise threshold value, the ECU 50 advances to the processing in step S130. If the ECU 50 determines that the in-cylinder pressure change rate (i) is less than the noise threshold value, the ECU 50 advances to the processing in step S140.

In step S130, the ECU 50 calculates an integrated value of the in-cylinder pressure change rates that are equal to or greater than the noise threshold value (Fig. 3). More specifically, the ECU 50 adds the in-cylinder pressure change rate (i) to the previous integrated value (i-1) to thereby calculate a new integrated value (i). Note that the initial value of the integrated value is set to 0.

In step S140, the ECU 50 increments the variable i. In step S150, the ECU 50 determines whether or not the variable i is a crank angle that corresponds to the combustion end timing. If the variable i has not reached a value corresponding to the crank angle that corresponds to the combustion end timing, the ECU 50 returns to the processing in step S120, and the processing is continued. If the variable i has reached a value corresponding to the crank angle that corresponds to the combustion end timing, the processing of the present routine is ended. According to the present routine, an integrated value of in-cylinder pressure change rates in a combustion period of a target cylinder is calculated.

As described above, according to the processing routine shown in Fig. 6, an integrated value as shown in Fig. 3 can be calculated. By using the integrated value as a combustion noise index, it is possible to estimate the level of combustion noise with a high degree of accuracy for each cycle, even in a case where noise is included in the waveform of the in-cylinder pressure change rate.

### (Modification)

In the system of the first embodiment that is described above, the in-cylinder pressure is detected by means of the in-cylinder pressure sensor 40. However, in-cylinder pressure acquisition means is not limited thereto. For example, a configuration may also be adopted in which the in-cylinder pressure is estimated using a model formula or the like. The same applies with respect to the embodiments described hereunder also.

Further, in the system of the first embodiment that is described above a configuration is adopted in which, in step S100 of Fig. 6, the in-cylinder pressure change rate is calculated as the amount of increase in the in-cylinder pressure per unit crank angle. However, the calculation method is not limited thereto. For example, the in-cylinder pressure change rate may also be calculated as the amount of increase in the in-cylinder pressure per unit time. The same applies with respect to the embodiments described hereunder also.

An engine to which the present invention can be applied is not limited to an in-cylinder direct injection engine as in the above described embodiment. It is also possible to apply the present invention to a port injection type engine. Further, the present invention can also be applied to a spark ignition type engine, and is not limited to a compression self-ignition type engine. The same applies with respect to the embodiments described hereunder also.

Note that, in the above described first embodiment, the in-cylinder pressure sensor 40 corresponds to "in-cylinder pressure acquisition means" in the first aspect.

Further, in this case, "in-cylinder pressure change rate calculation means" in the first aspect is realized by the ECU 50 executing the processing in the above described step S100, and "integrated value calculation means" in the first aspect is realized by the ECU 50 executing the processing in the above described steps S110 to S130.

### Second Embodiment

### [System configuration of second embodiment]

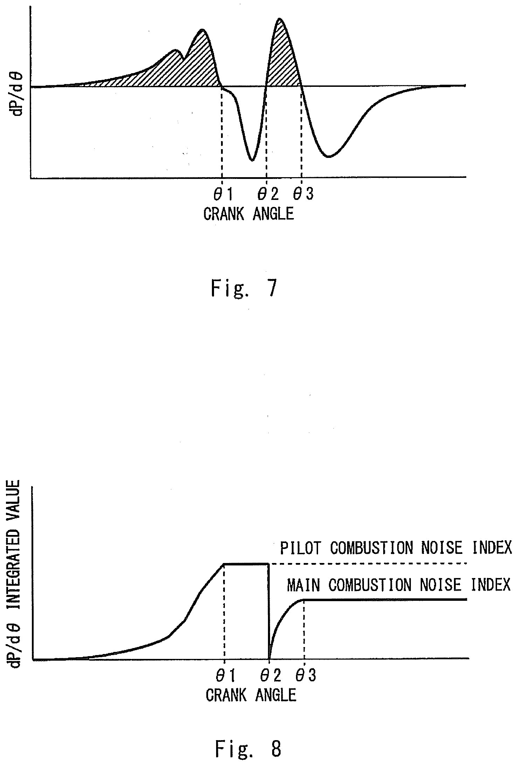

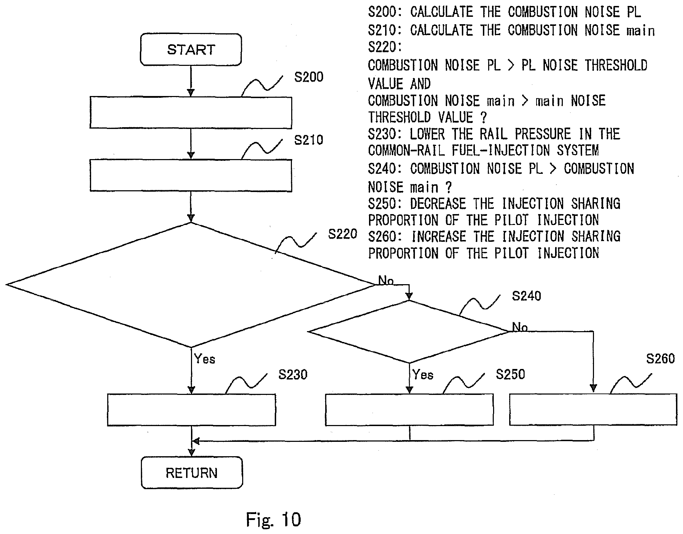

Next, a second embodiment of the present invention will be described referring to Fig. 7 to Fig. 10. The system of the present embodiment can be realized by adopting the configuration shown in Fig. 1 and causing the ECU 50 to execute a routine illustrated in Fig. 10 that is described later.

### [Characteristic configuration in second embodiment]

In the system of the second embodiment, the internal combustion engine 10 injects a total fuel injection amount by dividing the injection process into a plurality of fuel injection operations. Therefore, the ECU 50 is equipped with a multi-stage injection function. The multi-stage injection function divides the total fuel injection amount that the fuel injection valve 28 is caused to inject during one cycle into at least an amount that is injected by a main injection and an amount that is injected by a pilot injection that is prior to the main injection.

Note that, in the description of the present embodiment, although it is assumed that the multi-stage injection is a two-stage injection that includes a pilot injection and a main injection, the multi-stage injection may include three or more stages. For example, a configuration may be adopted in which a pilot injection is executed twice, or an after-injection is further executed following the main injection.

### (Combustion noise index)

Although it is possible to detect the combustion noise level with a high degree of accuracy according to the system of the first embodiment, in order to cause the combustion noise to converge at a predetermined level it is necessary to know whether the combustion noise is caused by pilot combustion or by main combustion. For that purpose, it is desirable to isolate the respective combustions and calculate combustion noise indices.

The calculation of combustion noise indices in the second embodiment of the present invention will now be described.

The ECU 50 of the present embodiment includes an in-cylinder pressure change rate calculation portion and an integrated value calculation portion that were described in the first embodiment. The integrated value calculation portion has a first integrated value calculation function and a second integrated value calculation function.

The first integrated value calculation function calculates a first integrated value (hereunder, referred to as "combustion noise PL") that is obtained by integrating in-cylinder pressure change rates that are equal to or greater than a noise threshold value with respect to each in-cylinder pressure change rate that is calculated by the in-cylinder pressure change rate calculation portion in a combustion period corresponding to a pilot injection.

The second integrated value calculation function calculates a second integrated value (hereunder, referred to as "combustion noise main") that is obtained by integrating in-cylinder pressure change rates that are equal to or greater than a noise threshold value with respect to each in-cylinder pressure change rate that is calculated by the in-cylinder pressure change rate calculation portion in a combustion period corresponding to a main injection.

Calculation of the combustion noise indices will now be described in more detail using Fig. 7 and Fig. 8.

Fig. 7 is a view that illustrates the relation between the crank angle and the in-cylinder pressure change rate in a compression stroke and an expansion stroke. In Fig. 7 and Fig. 8, it is assumed that a period from the combustion start timing until an angle θ2 is a combustion period corresponding to a pilot injection, and a period from the angle θ2 until the combustion end timing is a combustion period corresponding to a main injection. The angle θ2 is a crank angle at which the in-cylinder pressure change rate changes from a negative value to a positive value. The ECU 50 acquires the crank angle θ2 by calculating a crank angle at which the in-cylinder pressure change rate changed from a negative value to a positive value, and the ECU 50 may also acquire the crank angle θ2 using a map in which crank angles θ2 are defined for each operating state.

Fig. 8 is a view that, with respect to Fig. 7, illustrates the relation between an integrated value obtained by integrating in-cylinder pressure change rates that are equal to or greater than a noise threshold value and the crank angle. Fig. 8 illustrates an example in a case where the noise threshold value is taken as 0. In Fig. 8, an integrated value (combustion noise PL) obtained by integrating in-cylinder pressure change rates that are equal to or greater than 0 during the period from the combustion start timing until the angle θ2 is expressed as "pilot combustion noise index", and an integrated value (combustion noise main) obtained by integrating in-cylinder pressure change rates that are equal to or greater than 0 during the period from the angle θ2 until the combustion end timing is expressed as "main combustion noise index".

### (Combustion noise suppression control)

Next, combustion noise suppression control in the second embodiment of the present invention will be described.

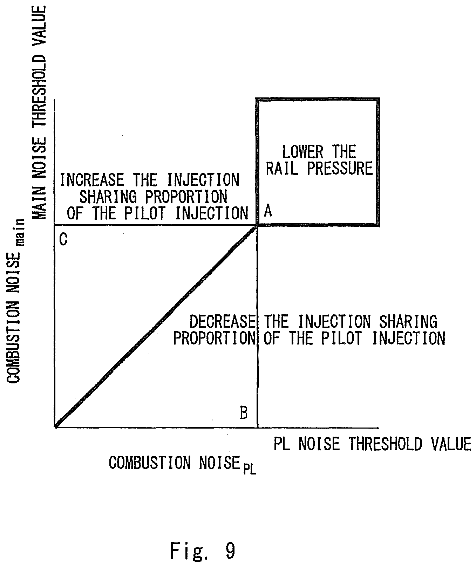

Fig. 9 is a view for describing control that suppresses combustion noise. A PL noise threshold value shown in Fig. 9 is a threshold value that is set with respect to the combustion noise PL. A main noise threshold value shown in Fig. 9 is a threshold value that is set with respect to the combustion noise main. Note that the PL noise threshold value and the main noise threshold value may be set to the same value or may be set to different values.

In the system of the present embodiment, combustion noise suppression control of three patterns is executed in accordance with a combination of a magnitude relationship between the combustion noise PL and the PL noise threshold value, a magnitude relationship between the combustion noise main and the main noise threshold value, and a magnitude relationship between the combustion noise PL and the combustion noise main.

The ECU 50 of the present embodiment includes a combustion noise suppression control portion. The combustion noise suppression control portion is equipped with a fuel pressure reduction function, a pilot injection proportion reduction function, and a pilot injection proportion enlargement function.

The fuel pressure reduction function reduces the pressure of fuel that is supplied to the fuel injection valve 28 when, as shown in region A in Fig. 9, a determination condition is established when the combustion noise PL is greater than the PL noise threshold value and the combustion noise main is greater than the main noise threshold value. More specifically, the fuel pressure reduction function outputs a control signal to the fuel pump 36 that instructs the fuel pump 36 to reduce the pressure, to thereby lower the rail pressure in the common-rail fuel-injection system 34.

In a case where, as shown in region B in Fig. 9, the aforementioned determination condition is not established and the combustion noise PL is greater than the combustion noise main, the pilot injection proportion reduction function lowers an injection sharing proportion of the pilot injection and raises an injection sharing proportion of the main injection that are to be injected by the above described multi-stage injection function in subsequent cycles.

In a case where, as shown in region C in Fig. 9, the aforementioned determination condition is not established and the combustion noise PL is less than or equal to the combustion noise main, the pilot injection proportion enlargement function increases the injection sharing proportion of the pilot injection and decreases the injection sharing proportion of the main injection that are to be injected by the above described multi-stage injection function in subsequent cycles.

According to the combustion noise suppression control of the present embodiment, integrated values of in-cylinder pressure change rates that contribute to pilot combustion and main combustion are used as a pilot combustion noise index and a main combustion noise index, respectively. By using integrated values of in-cylinder pressure change rates that contribute to combustion as combustion noise indices, the combustion noise during one cycle can be detected with high accuracy. As described with regard to Fig. 4 and Fig. 5 in the first embodiment, by using the integrated values as the combustion noise indices, combustion noise can also be estimated with high accuracy in an internal combustion engine that performs multi-stage injection. Further, by using these indices, it is possible to identify whether the cause of the combustion noise is the pilot combustion or is the main combustion, and appropriate combustion noise suppression control can be executed.

### (Flowchart)

Fig. 10 is a flowchart of a processing routine that the ECU 50 executes to realize the above described combustion noise suppression control. The ECU 50 executes the present routine for each cycle.

In step S200, the ECU 50 calculates the combustion noise PL. Since the method for calculating the combustion noise PL is the same as described above except that the combustion end timing that is used in step S150 in the processing routine in Fig. 6 is replaced with the pilot combustion end timing (θ2 in Fig. 7), a description thereof is omitted.

In step S210, the ECU 50 calculates the combustion noise main. Since the method for calculating the combustion noise main is the same as described above except that the combustion start timing that is set in step S 110 in the processing routine in Fig. 6 is replaced with the pilot combustion end timing (θ2 in Fig. 7), a description thereof is omitted.

In step S220, the ECU 50 determines whether or not the combustion noise PL is greater than the PL noise threshold value and the combustion noise main is greater than the main noise threshold value. If the determination condition in step S220 is established, the ECU 50 advances to the processing in step S230. If the determination condition is not established, the ECU 50 advances to the processing in step S240.

In step S230, the fuel pressure reduction function of the ECU 50 outputs a control signal to the fuel pump 36 that instructs the fuel pump 36 to reduce the pressure. As a result, the rail pressure in the common-rail fuel-injection system 34 falls, and the pressure of fuel that is supplied to the fuel injection valve 28 in the next cycle and thereafter decreases.

In step S240, the ECU 50 determines whether or not the combustion noise PL is greater than the combustion noise main. If the combustion noise PL is greater than the combustion noise main, the ECU 50 advances to the processing in step S250. If the combustion noise PL is less than or equal to the combustion noise main, the ECU 50 advances to the processing in step S260.

In step S250, the pilot injection proportion reduction function of the ECU 50 decreases the injection sharing proportion of the pilot injection and increases the injection sharing proportion of the main injection that are to be injected by the above described multi-stage injection function in the next cycle.

In step S260, the pilot injection proportion enlargement function of the ECU 50 increases the injection sharing proportion of the pilot injection and decreases the injection sharing proportion of the main injection that are to be injected by the above described multi-stage injection function in the next cycle.

In this connection, although in the system of the second embodiment that is described above, a configuration is adopted in which the combustion noise suppression control portion includes each of a fuel pressure reduction function, a pilot injection proportion reduction function and a pilot injection proportion enlargement function, the configuration of the combustion noise suppression control portion is not limited thereto. A configuration may also be adopted in which the combustion noise suppression control portion includes at least one function among the fuel pressure reduction function, the pilot injection proportion reduction function and the pilot injection proportion enlargement function.

Further, although in step S230 in Fig. 10 that is described above, the combustion noise is reduced by control that lowers the rail pressure in the common-rail fuel-injection system 34, the present invention is not limited thereto, and a configuration may also be adopted that reduces the combustion noise by control that lowers a supercharging pressure.

Further, although in step S230, step S250 and step S260 in the flowchart in Fig. 10 that is described above, control is executed that changes the fuel pressure or the injection sharing proportion of the pilot injection in the next cycle, such changes are not limited to the next cycle, and a configuration may also be adopted in which such changes are executed from the cycle after the next cycle onwards.

Note that, in the above described second embodiment, the multi-stage injection function of the ECU 50 corresponds to "multi-stage injection means" in the third aspect.

Further, in this case, "first integrated value calculation means" in the third aspect is realized by the ECU 50 executing the processing in the above described step S200, "second integrated value calculation means" in the third aspect is realized by the ECU 50 executing the processing in the above described step S210, "fuel pressure reduction means" in the sixth aspect is realized by the ECU 50 executing the processing in the above described steps S220 and S230, "pilot injection proportion reduction means" in the fourth and sixth aspects is realized by the ECU 50 executing the processing in the above described steps S220, S240 and S250, and "pilot injection proportion enlargement means" in the fifth and sixth aspects is realized by the ECU 50 executing the processing in the above described steps S220, S240 and S250.

In addition, in the second embodiment, the combustion noise PL that is calculated in the above described step S200 corresponds to "first integrated value" in the third aspect, the combustion noise main that is calculated in the above described step S210 corresponds to "second integrated value" in the third aspect, the PL noise threshold value in the above described step S220 corresponds to "first threshold value" in the sixth aspect, and the main noise threshold value in the above described step S220 corresponds to "second threshold value" in the sixth aspect.

### Third Embodiment

### [System configuration of third embodiment]

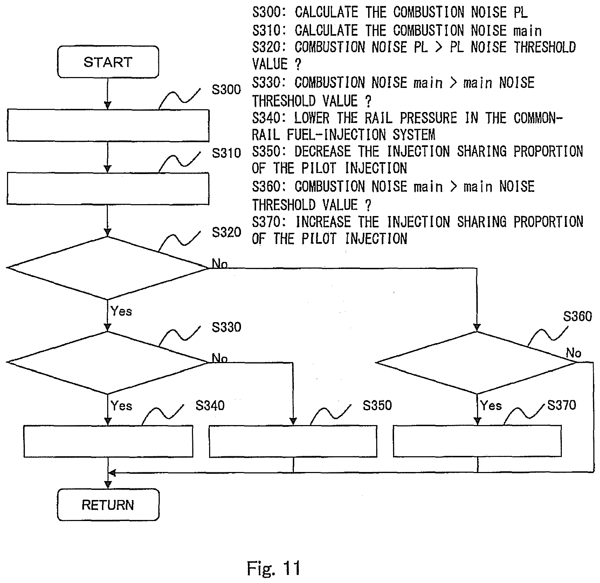

Next, a third embodiment of the present invention will be described referring to Fig. 11. The system of the present embodiment can be realized by adopting the configuration shown in Fig. 1 and causing the ECU 50 to execute a routine illustrated in Fig. 11 that is described later. Further, in the system of the present embodiment the ECU 50 is equipped with the multi-stage injection function, the in-cylinder pressure change rate calculation portion and the integrated value calculation portion that are described in the second embodiment, and since the purposes thereof as well as the calculation of combustion noise indices are the same as in the second embodiment, a description will be omitted here.

### [Characteristic configuration in third embodiment]

### (Combustion noise suppression control)

In the system of the present embodiment combustion noise suppression control of three patterns is executed in accordance with a combination of a magnitude relationship between the combustion noise PL and the PL noise threshold value and a magnitude relationship between the combustion noise main and the main noise threshold value. Note that, the description of the combustion noise PL, the PL noise threshold value, the combustion noise main and the main noise threshold value is similar to the description in the second embodiment, and is therefore omitted here.

The ECU 50 of the present embodiment includes a combustion noise suppression control portion. The combustion noise suppression control portion is equipped with a fuel pressure reduction function, a pilot injection proportion reduction function, and a pilot injection proportion enlargement function.

In a case where the combustion noise PL is greater than the PL noise threshold value and the combustion noise main is greater than the main noise threshold value, the fuel pressure reduction function reduces the pressure of fuel that is supplied to the fuel injection valve 28. More specifically, the fuel pressure reduction function outputs a control signal to the fuel pump 36 to instruct the fuel pump 36 to reduce the pressure, to thereby lower the rail pressure in the common-rail fuel-injection system 34.

In a case where the combustion noise PL is greater than the PL noise threshold value and the combustion noise main is equal to or less than the main noise threshold value, the pilot injection proportion reduction function decreases the injection sharing proportion of the pilot injection and increases the injection sharing proportion of the main injection that are to be injected by the above described multi-stage injection function in subsequent cycles.

In a case where the combustion noise PL is equal to or less than the PL noise threshold value and the combustion noise main is greater than the main noise threshold value, the pilot injection proportion enlargement function increases the injection sharing proportion of the pilot injection and decreases the injection sharing proportion of the main injection that are to be injected by the above described multi-stage injection function in subsequent cycles.

According to the combustion noise suppression control of the present embodiment, integrated values of in-cylinder pressure change rates that contribute to pilot combustion and main combustion are used as a pilot combustion noise index and a main combustion noise index, respectively. By using integrated values of in-cylinder pressure change rates that contribute to combustion as combustion noise indices, the combustion noise during one cycle can be detected with high accuracy. As described with regard to Fig. 4 and Fig. 5 in the first embodiment, by using the integrated values as the combustion noise indices, combustion noise can also be estimated with high accuracy in an internal combustion engine that performs multi-stage injection. Further, by using these indices, it is possible to identify whether the cause of the combustion noise is the pilot combustion or is the main combustion, and appropriate combustion noise suppression control can be executed.

### (Flowchart)

Fig. 11 is a flowchart of a processing routine that the ECU 50 executes to realize the above described combustion noise suppression control. The ECU 50 executes the present routine for each cycle.

In step S300, the ECU 50 calculates the combustion noise PL. Further, in step S310, the ECU 50 calculates the combustion noise main. Since the processing in the aforementioned step S300 and step S310 is the same as in step S200 and step S210 in Fig. 10, a description thereof is mitted here.

In step S320, the ECU 50 determines whether or not the combustion noise PL is greater than the PL noise threshold value. If the combustion noise PL is greater than the PL noise threshold value, the ECU 50 advances to the processing in step S330. If the combustion noise PL is less than or equal to the PL noise threshold value, the ECU 50 advances to the processing in step S360.

In step S330, the ECU 50 determines whether or not the combustion noise main is greater than the main noise threshold value. If the combustion noise main is greater than the main noise threshold value, the ECU 50 advances to the processing in step S340. If the combustion noise main is less than or equal to the main noise threshold value, the ECU 50 advances to the processing in step S350.

In step S340, the fuel pressure reduction function of the ECU 50 outputs a control signal to the fuel pump 36 that instructs the fuel pump 36 to reduce the pressure. As a result, the rail pressure in the common-rail fuel-injection system 34 falls, and the pressure of fuel that is supplied to the fuel injection valve 28 in the next cycle and thereafter decreases.

In step S350, the pilot injection proportion reduction function of the ECU 50 decreases the injection sharing proportion of the pilot injection and increases the injection sharing proportion of the main injection that are to be injected by the above described multi-stage injection function in the next cycle.

In step S360, the ECU 50 determines whether or not the combustion noise main is greater than the main noise threshold value. If the combustion noise main is greater than the main noise threshold value, the ECU 50 advances to the processing in step S370. If the combustion noise main is less than or equal to the main noise threshold value, the ECU 50 ends the processing of the present routine.

In step S370, the pilot injection proportion enlargement function of the ECU 50 increases the injection sharing proportion of the pilot injection and decreases the injection sharing proportion of the main injection that are to be injected by the above described multi-stage injection function in the next cycle.

In this connection, although in the system of the third embodiment that is described above, a configuration is adopted in which the combustion noise suppression control portion includes each of a fuel pressure reduction function, a pilot injection proportion reduction function and a pilot injection proportion enlargement function, the configuration of the combustion noise suppression control portion is not limited thereto. A configuration may also be adopted in which the combustion noise suppression control portion includes at least one function among the fuel pressure reduction function, the pilot injection proportion reduction function and the pilot injection proportion enlargement function.

Further, although in step S340 in Fig. 11 that is described above, the combustion noise is reduced by control that lowers the rail pressure in the common-rail fuel-injection system 34, the present invention is not limited thereto, and a configuration may also be adopted that reduces the combustion noise by control that lowers a supercharging pressure.

Further, although in step S340, step S350 and step S370 in the flowchart in Fig. 11 that is described above, control is executed that changes the fuel pressure or the injection sharing proportion of the pilot injection in the next cycle, such changes are not limited to the next cycle, and a configuration may also be adopted in which such changes are executed from the cycle after the next cycle onwards.

Note that, in the above described third embodiment, the multi-stage injection function of the ECU 50 corresponds to "multi-stage injection means" in the third aspect.

Further, in this case, "first integrated value calculation means" in the third aspect is realized by the ECU 50 executing the processing in the above described step S300, "second integrated value calculation means" in the third aspect is realized by the ECU 50 executing the processing in the above described step S310, "fuel pressure reduction means" in the ninth aspect is realized by the ECU 50 executing the processing in the above described steps S320 to S340, "pilot injection proportion reduction means" in the seventh and ninth aspects is realized by the ECU 50 executing the processing in the above described steps S320, S330 and S350, and "pilot injection proportion enlargement means" in the eighth and ninth inventions is realized by the ECU 50 executing the processing in the above described steps S320, S360 and S370.

In addition, in the third embodiment, the combustion noise PL that is calculated in the above described step S300 corresponds to "first integrated value" in the third aspect, the combustion noise main that is calculated in the above described step S310 corresponds to "second integrated value" in the third aspect, the PL noise threshold value in the above described step S320 corresponds to "first threshold value" in the seventh to ninth aspects, and the main noise threshold value in the above described steps S330 and S360 corresponds to "second threshold value" in the seventh to ninth aspects.

### Fourth Embodiment

### [System configuration of fourth embodiment]

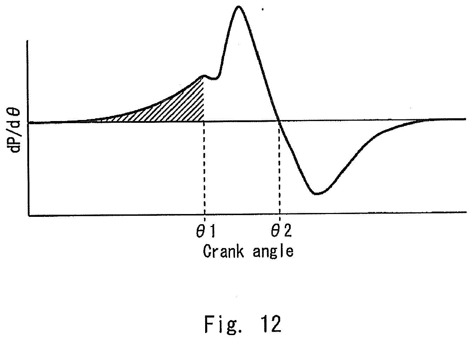

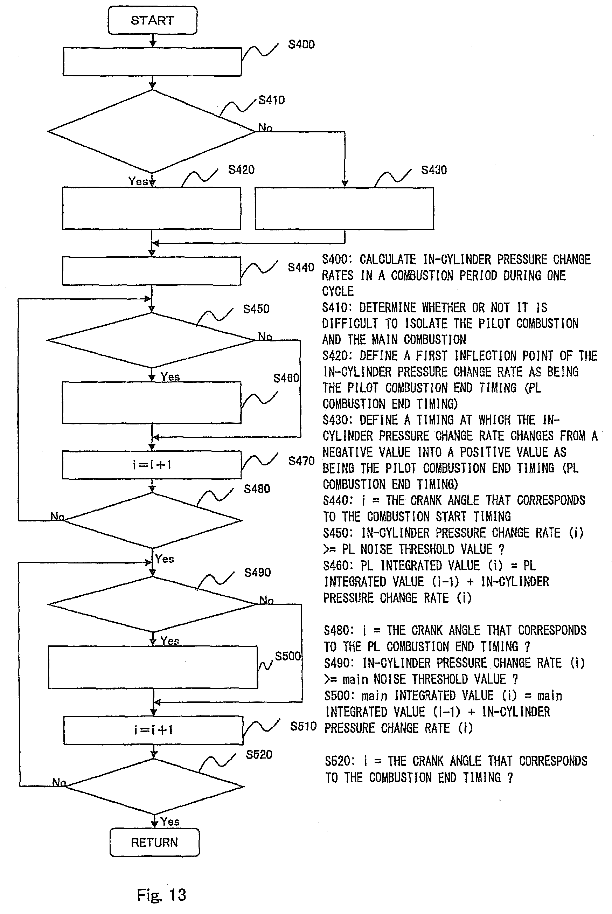

Next, a fourth embodiment of the present invention will be described referring to Fig. 12 and Fig. 13. The system of the present embodiment can be realized by adopting the configuration shown in Fig. 1 and causing the ECU 50 to execute a routine illustrated in Fig. 13 that is described later. Further, in the system of the present embodiment the ECU 50 is equipped with the multi-stage injection function described in the second embodiment.

### [Characteristic configuration in fourth embodiment]

### (Combustion noise index)

In some cases it is difficult to isolate pilot combustion and main combustion, such as in a case where injection is performed a plurality of time by means of a multi-stage injection function, in a case where a pilot injection timing and a main injection timing are near, or in a case where the main combustion is diffusion combustion.

Fig. 12 is a view that illustrates a relation between an in-cylinder pressure change rate and a crank angle in a case in which it is difficult to isolate the pilot combustion and the main combustion. As shown in Fig. 12, the pilot combustion and the main combustion are connected in the form of a single mountain shape, and it is difficult to isolate the pilot combustion and the main combustion. Therefore, in the system of the present embodiment, noise that occurs up to a first inflection point (θ1 in Fig. 12) of the in-cylinder pressure change rate is determined as being noise that is caused by pilot combustion.

The calculation of combustion noise indices in the fourth embodiment of the present invention will now be described.

The ECU 50 of the system of the present embodiment includes an in-cylinder pressure change rate calculation portion that is described in the first embodiment, and includes a determination portion and an integrated value calculation portion as a characteristic configuration. The integrated value calculation portion is equipped with a first integrated value calculation function and a second integrated value calculation function.

The determination portion determines that a determination condition is established in a case where an in-cylinder pressure change rate that is calculated by the in-cylinder pressure change rate calculation portion changed to a positive value after being a negative value in a combustion period during one cycle.

In a case where the aforementioned determination condition is not established, the first integrated value calculation function calculates a first integrated value (hereunder, referred to as "PL integrated value") that is obtained by taking a period from a combustion start timing until a first inflection point as a combustion period that corresponds to a pilot injection and integrating in-cylinder pressure change rates that are equal to or greater than a noise threshold value with respect to each in-cylinder pressure change rate that is calculated by the in-cylinder pressure change rate calculation portion in the combustion period.

In a case where the aforementioned determination condition is not established, the second integrated value calculation function calculates a second integrated value (hereunder, referred to as "main integrated value") that is obtained by taking a period from the first inflection point to a combustion end timing as a combustion period that corresponds to a main injection and integrating in-cylinder pressure change rates that are equal to or greater than a noise threshold value with respect to each in-cylinder pressure change rate that is calculated by the in-cylinder pressure change rate calculation portion in the combustion period.

According to the method of calculating combustion noise indices of the present embodiment, in an internal combustion engine in which multi-stage injection is performed, even in a case where it is difficult to isolate pilot combustion that is caused by a pilot injection and main combustion that is caused by a main injection, the respective combustions can be isolated and combustion noise indices can be calculated. Therefore, even when it is difficult to isolate a pilot combustion and a main combustion, the combustion noise suppression control described in the second embodiment or the third embodiment can be realized.

### (Flowchart)

Fig. 13 is a flowchart of a processing routine that the ECU 50 executes to calculate the above described combustion noise indices. The ECU 50 executes the present routine for each cycle.

In step S400, the ECU 50 calculates in-cylinder pressure change rates in a combustion period during one cycle. Since this processing is the same as in step S100 of the processing routine in Fig. 6, a description thereof is omitted here.

In step S410, the ECU 50 determines whether or not it is difficult to isolate the pilot combustion and the main combustion. More specifically, if an in-cylinder pressure change rate that is calculated by the in-cylinder pressure change rate calculation portion does not change to a positive value after becoming a negative value in a combustion period during one cycle, the ECU 50 determines that it is difficult to isolate the pilot combustion and the main combustion. On the other hand, if the in-cylinder pressure change rate changes to a positive value after becoming a negative value, the ECU 50 determines that it is easy to isolate the pilot combustion and the main combustion. If the ECU 50 determines that it is difficult to isolate the pilot combustion and the main combustion, the ECU 50 advances to the processing in step S420. If the ECU 50 determines that it is easy to isolate the pilot combustion and the main combustion, the ECU 50 advances to the processing in step S430.

In step S420, the ECU 50 defines a first inflection point of the in-cylinder pressure change rate as being the pilot combustion end timing (PL combustion end timing).

In step S430, the ECU 50 defines a timing at which the in-cylinder pressure change rate changes from a negative value into a positive value as being the pilot combustion end timing (PL combustion end timing).

Since the contents of the processing in step S440 and thereafter are equivalent to the contents of the processing routine in Fig. 6, a detailed description thereof is omitted. The ECU 50 calculates the PL integrated value by the processing from step S440 to S480, and calculates the main integrated value by the processing from step S490 to S520.

Note that, in the above described fourth embodiment, "determination means" in the above described tenth aspect is realized by the ECU 50 executing the processing in the above described step S400, "first integrated value calculation means" in the tenth aspect is realized by the ECU 50 executing the processing in the above described steps S420 and S440 to S480, and "second integrated value calculation means" in the tenth aspect is realized by the ECU 50 executing the processing in the above described steps S420, S440 and S490 to S520.

### Reference Signs List

- 10: internal combustion engine
- 12: cylinders
- 14: piston
- 16: intake port
- 18: exhaust port
- 28: fuel injection valve
- 30: fuel tank
- 32: fuel supply pipe
- 34: common-rail fuel-injection system
- 36: fuel pump
- 38: fuel supply branch pipes
- 50: ECU (Electronic Control Unit)
- 52: crank angle sensor
- 54: accelerator opening sensor

## Claims

1. A control device for an internal combustion engine (10), **characterized by** comprising:
in-cylinder pressure acquisition means (40, 50) for acquiring an in-cylinder pressure for each time period or for each crank angle;
in-cylinder pressure change rate calculation means (S100, 50) for calculating an in-cylinder pressure change rate that is an amount of increase in an in-cylinder pressure per unit time or unit crank angle based on each in-cylinder pressure that is acquired by the in-cylinder pressure acquisition means (40, 50) in a combustion period during one cycle;
integrated value calculation means (S110-S130, 50) for calculating an integrated value by integrating in-cylinder pressure change rates that are equal to or greater than a noise threshold value that is equal to or greater than 0 or is a negative value close to 0 with respect to each in-cylinder pressure change rate that is calculated by the in-cylinder pressure change rate calculation means (S100, 50); and
combustion noise suppression control means (50) for executing control that suppresses combustion noise based on an integrated value that is calculated by the integrated value calculation means (S110-S130, 50).

2. The control device for an internal combustion engine (10) according to claim 1, wherein the noise threshold value is greater than 0.

3. The control device for an internal combustion engine (10) according to claim 1 or 2, further comprising:
multi-stage injection means (50) for dividing a total fuel injection amount that a fuel injection valve (28) is caused to inject during one cycle into at least an amount injected by a main injection and an amount injected by a pilot injection that is prior to the main injection;
wherein the integrated value calculation means (S110-S130, 50) includes:
first integrated value calculation means (S200, S300, 50) for calculating a first integrated value that is obtained by, with respect to each in-cylinder pressure change rate that is calculated by the in-cylinder pressure change rate calculation means (S100, 50) in a combustion period corresponding to the pilot injection, integrating in-cylinder pressure change rates that are equal to or greater than the noise threshold value; and
second integrated value calculation means (S210, S310, 50) for calculating a second integrated value that is obtained by, with respect to each in-cylinder pressure change rate that is calculated by the in-cylinder pressure change rate calculation means (S100, 50) in a combustion period corresponding to the main injection, integrating in-cylinder pressure change rates that are equal to or greater than the noise threshold value.

4. The control device for an internal combustion engine (10) according to claim 3, wherein the combustion noise suppression control means (50) includes pilot injection proportion reduction means (S220, S240, S250, 50) for, in a case where the first integrated value is greater than the second integrated value, reducing an injection sharing proportion of the pilot injection by the multi-stage injection means in subsequent cycles.

5. The control device for an internal combustion engine (10) according to claim 3 or 4, wherein the combustion noise suppression control means (50) includes pilot injection proportion enlargement means (S220, S240, S260, 50) for, in a case where the first integrated value is less than or equal to the second integrated value, increasing an injection sharing proportion of the pilot injection by the multi-stage injection means (50) in subsequent cycles.

6. The control device for an internal combustion engine (10) according to claim 3, wherein the combustion noise suppression control means (50) includes:
fuel pressure reduction means (S220, S230, 50) for reducing a pressure of fuel that is supplied to the fuel injection valve in a case where a determination condition is established when the first integrated value is greater than a first threshold value and the second integrated value is greater than a second threshold value;
pilot injection proportion reduction means (S220, S240, S250, 50) for, in a case where the determination condition is not established and the first integrated value is larger than the second integrated value, reducing an injection sharing proportion of the pilot injection by the multi-stage injection means (50) in subsequent cycles; and
pilot injection proportion enlargement means (S220, S240, S260, 50) for, in a case where the determination condition is not established and the first integrated value is less than or equal to the second integrated value, increasing an injection sharing proportion of the pilot injection by the multi-stage injection means (50) in subsequent cycles.

7. The control device for an internal combustion engine (10) according to claim 3, wherein the combustion noise suppression control means (50) includes:
pilot injection proportion reduction means (S320, S330, S350, 50) for, in a case where the first integrated value is greater than a first threshold value and the second integrated value is less than or equal to a second threshold value, reducing an injection sharing proportion of the pilot injection by the multi-stage injection means (50) in subsequent cycles.

8. The control device for an internal combustion engine (10) according to claim 3 or 7, wherein the combustion noise suppression control means (50) includes:
pilot injection proportion enlargement means (S320, S360, S370, 50) for, in a case where the first integrated value is less than or equal to a first threshold value and the second integrated value is greater than a second threshold value, increasing an injection sharing proportion of the pilot injection by the multi-stage injection means (50) in subsequent cycles.

9. The control device for an internal combustion engine (10) according to claim 3, wherein the combustion noise suppression control means (50) includes:
fuel pressure reduction means (S320-S340, 50) for, in a case where the first integrated value is greater than a first threshold value and the second integrated value is greater than a second threshold value, reducing a pressure of fuel that is supplied to the fuel injection valve (28);
pilot injection proportion reduction means (S320, S330, S350, 50) for, in a case where the first integrated value is greater than the first threshold value and the second integrated value is less than or equal to the second threshold value, reducing an injection sharing proportion of the pilot injection by the multi-stage injection means in subsequent cycles; and
pilot injection proportion enlargement means (S320, S360, S370, 50) for, in a case where the first integrated value is less than or equal to the first threshold value and the second integrated value is greater than the second threshold value, increasing an injection sharing proportion of the pilot injection by the multi-stage injection means in subsequent cycles.

10. The control device for an internal combustion engine according to any one of claims 3 to 9, further comprising:
determination means (S400, 50) for determining that a determination condition is established in a case where an in-cylinder pressure change rate that is calculated by the in-cylinder pressure change rate calculation means (S100, 50) changes to a positive value after becoming a negative value in a combustion period during one cycle;
wherein:
in a case where the determination condition is not established, the first integrated value calculation means (S420, S440-S480, 50) calculates the first integrated value by taking a period from a combustion start timing until a first inflection point as a combustion period that corresponds to the pilot injection; and
in a case where the determination condition is not established, the second integrated value calculation means (S420, S440, S490-S520, 50) calculates the second integrated value by taking a period from the first inflection point until a combustion end timing as a combustion period that corresponds to the main injection.

## Patentansprüche

1. Steuervorrichtung für einen Verbrennungsmotor (10), **dadurch gekennzeichnet, dass** sie umfasst:
ein Zylinderinnendruck-Erfassungsmittel (40, 50) zum Erfassen eines Zylinderinnendrucks für jeden Zeitraum oder für jeden Kurbelwinkel,
Zylinderinnendruckänderungsratenberechnungsmittel (S100, 50) zum Berechnen einer Zylinderinnendruckänderungsrate, die ein Betrag des Anstiegs eines Zylinderinnendrucks pro Zeiteinheit oder Kurbelwinkeleinheit ist, auf der Basis jedes Zylinderinnendrucks, der durch das Zylinderinnendruck-Erfassungsmittel (40, 50) in einem Verbrennungszeitraum während eines einzelnen Zyklus erfasst wird,
ein Integrationswertberechnungsmittel (S110-S130, 50) zum Berechnen eines integrierten Wertes durch Integrieren von Zylinderinnendruckänderungsraten, die mindestens so groß sind wie ein Geräuschschwellenwert, der mit Bezug auf jede durch das Zylinderinnendruckänderungsratenberechnungsmittel (S100, 50) berechnete Zylinderinnendruckänderungsrate mindestens 0 beträgt oder ein negativer Wert nahe 0 ist, und
ein Verbrennungsgeräuschunterdrückungssteuerungsmittel (50) zum Ausführen einer Steuerung, die ein Verbrennungsgeräusch unterdrückt, auf der Basis eines integrierten Wertes, der durch das Integrationswertberechnungsmittel (S110-S130, 50) berechnet wurde.

2. Steuervorrichtung für einen Verbrennungsmotor (10) nach Anspruch 1, wobei der Geräuschschwellenwert größer als 0 ist.

3. Steuervorrichtung für einen Verbrennungsmotor (10) nach Anspruch 1 oder 2, ferner umfassend:
ein Mehrstufeneinspritzmittel (50) zum Aufteilen eines Kraftstoffeinspritz-Gesamtbetrages, dessen Einspritzung durch ein Kraftstoffeinspritzventil (28) während eines einzelnen Taktes veranlasst wird, in mindestens einen Betrag, der durch eine Haupteinspritzung eingespritzt wird, und einen Betrag, der durch eine Piloteinspritzung eingespritzt wird, die vor der Haupteinspritzung erfolgt,
wobei das Integrationswertberechnungsmittel (S110-S130, 50) enthält:
ein erstes Integrationswertberechnungsmittel (S200, S300, 50) zum Berechnen eines ersten integrierten Wertes, der in Bezug auf jede Zylinderinnendruckänderungsrate, die durch das Zylinderinnendruckänderungsratenberechnungsmittel (S100, 50) in einem Verbrennungszeitraum, der der Piloteinspritzung entspricht, berechnet wird, durch Integrieren von Zylinderinnendruckänderungsraten, die mindestens so groß sind wie der Geräuschschwellenwert, erhalten wird, und
ein zweites Integrationswertberechnungsmittel (S210, S310, 50) zum Berechnen eines zweiten integrierten Wertes, der in Bezug auf jede Zylinderinnendruckänderungsrate, die durch das Zylinderinnendruckänderungsratenberechnungsmittel (S100, 50) in einem Verbrennungszeitraum berechnet wird, der der Haupteinspritzung entspricht, durch Integrieren von Zylinderinnendruckänderungsraten, die mindestens so groß sind wie der Geräuschschwellenwert, erhalten wird.

4. Steuervorrichtung für einen Verbrennungsmotor (10) nach Anspruch 3, wobei das Verbrennungsgeräuschunterdrückungssteuerungsmittel (50) ein Piloteinspritzungsproportionsreduzierungsmittel (S220, S240, S250, 50) enthält, um in einem Fall, wo der erste integrierte Wert größer ist als der zweite integrierte Wert, einen Einspritzanteilsproportion der Piloteinspritzung durch das Mehrstufeneinspritzmittel in anschließenden Takten zu reduzieren.

5. Steuervorrichtung für einen Verbrennungsmotor (10) nach Anspruch 3 oder 4, wobei das Verbrennungsgeräuschunterdrückungssteuerungsmittel (50) Piloteinspritzungsproportionsvergrößerungsmittel (S220, S240, S260, 50) enthält, um in einem Fall, wo der erste integrierte Wert maximal so groß ist wie der zweite integrierte Wert, eine Einspritzanteilsproportion der Piloteinspritzung durch das Mehrstufeneinspritzmittel (50) in anschließenden Takten zu vergrößern.

6. Steuervorrichtung für einen Verbrennungsmotor (10) nach Anspruch 3, wobei das Verbrennungsgeräuschunterdrückungssteuerungsmittel (50) enthält:
Kraftstoffdruckreduzierungsmittel (S220, S230, 50) zum Reduzieren eines Drucks von Kraftstoff, der einem Kraftstoffeinspritzventil zugeführt wird, in einem Fall, wo eine Bestimmungsbedingung hergestellt ist, wenn der erste integrierte Wert größer ist als ein erster Schwellenwert und der zweite integrierte Wert größer ist als ein zweiter Schwellenwert,
ein Piloteinspritzungsproportionsreduzierungsmittel (S220, S240, S250, 50), um in einem Fall, wo die Bestimmungsbedingung nicht hergestellt ist und der erste integrierte Wert größer ist als der zweite integrierte Wert, eine Einspritzanteilsproportion der Piloteinspritzung durch das Mehrstufeneinspritzmittel (50) in anschließenden Takten zu reduzieren, und
ein Piloteinspritzungsproportionsvergrößerungsmittel (S220, S240, S260, 50), um in einem Fall, wo die Bestimmungsbedingung nicht hergestellt ist und der erste integrierte Wert maximal so groß ist wie der zweite integrierte Wert, eine Einspritzanteilsproportion der Piloteinspritzung durch das Mehrstufeneinspritzmittel (50) in anschließenden Takten zu erhöhen.

7. Steuervorrichtung für einen Verbrennungsmotor (10) nach Anspruch 3, wobei das Verbrennungsgeräuschunterdrückungssteuerungsmittel (50) enthält:
ein Piloteinspritzungsproportionsreduzierungsmittel (S320, S330, S350, 50), um in einem Fall, wo der erste integrierte Wert größer ist als ein erster Schwellenwert und der zweite integrierte Wert maximal so groß ist wie ein zweiter Schwellenwert, eine Einspritzanteilsproportion der Piloteinspritzung durch das Mehrstufeneinspritzmittel (50) in anschließenden Takten zu reduzieren.

8. Steuervorrichtung für einen Verbrennungsmotor (10) nach Anspruch 3 oder 7, wobei das Verbrennungsgeräuschunterdrückungssteuerungsmittel (50) enthält:
ein Piloteinspritzungsproportionsvergrößerungsmittel (S320, S360, S370, 50), um in einem Fall, wo der erste integrierte Wert maximal so groß ist wie ein erster Schwellenwert und der zweite integrierte Wert größer ist als ein zweiter Schwellenwert, eine Einspritzanteilsproportion der Piloteinspritzung durch das Mehrstufeneinspritzmittel (50) in anschließenden Takten zu erhöhen.

9. Steuervorrichtung für einen Verbrennungsmotor (10) nach Anspruch 3, wobei das Verbrennungsgeräuschunterdrückungssteuerungsmittel (50) enthält:
ein Kraftstoffdruckreduzierungsmittel (S320-S340, 50), um in einem Fall, wo der erste integrierte Wert größer ist als ein erster Schwellenwert und der zweite integrierte Wert größer ist als ein zweiter Schwellenwert, einen Druck von Kraftstoff, der einem Kraftstoffeinspritzventil (28) zugeführt wird, zu reduzieren,
ein Piloteinspritzungsproportionsreduzierungsmittel (S320, S330, S350, 50), um in einem Fall, wo der erste integrierte Wert größer ist als der erste Schwellenwert und der zweite integrierte Wert maximal so groß ist wie der zweite Schwellenwert, eine Einspritzanteilsproportion der Piloteinspritzung durch das Mehrstufeneinspritzmittel in anschließenden Takten zu reduzieren, und
ein Piloteinspritzungsproportionsvergrößerungsmittel (S320, S360, S370, 50), um in einem Fall, wo der erste integrierte Wert maximal so groß ist wie der erste Schwellenwert und der zweite integrierte Wert größer ist als der zweite Schwellenwert, eine Einspritzanteilsproportion der Piloteinspritzung durch das Mehrstufeneinspritzmittel in anschließenden Takten zu erhöhen.

10. Steuervorrichtung für einen Verbrennungsmotor nach einem der Ansprüche 3 zu 9, ferner umfassend:
ein Bestimmungsmittel (S400, 50) zum Bestimmen, dass eine Bestimmungsbedingung hergestellt ist, falls sich eine durch das Zylinderinnendruckänderungsratenberechnungsmittel (S100, 50) berechnete Zylinderinnendruckänderungsrate zu einem positiven Wert ändert, nachdem sie in einem Verbrennungszeitraum während eines einzelnen Zyklus zu einem negativen Wert geworden war,
wobei:
in einem Fall, wo die Bestimmungsbedingung nicht hergestellt ist, das erste Integrationswertberechnungsmittel (S420, S440-S480, 50) den ersten integrierten Wert berechnet, indem ein Zeitraum ab einem Verbrennungsbeginnzeitpunkt bis zu einem ersten Umkehrpunkt als ein Verbrennungszeitraum genommen wird, der der Piloteinspritzung entspricht, und
in einem Fall, wo die Bestimmungsbedingung nicht hergestellt ist, das zweite Integrationswertberechnungsmittel (S420, S440, S490-S520, 50) den zweiten integrierten Wert berechnet, indem ein Zeitraum ab dem ersten Umkehrpunkt bis zu einem Verbrennungsendzeitpunkt als ein Verbrennungszeitraum genommen wird, der der Haupteinspritzung entspricht.

## Revendications

1. Dispositif de commande pour un moteur à combustion interne (10), **caractérisé en ce qu'**il comporte :
des moyens d'acquisition de pression dans le cylindre (40, 50) destinés à acquérir une pression dans le cylindre pour chaque période ou pour chaque angle de vilebrequin ;
des moyens de calcul de taux de changement de pression dans le cylindre (S100, 50) destinés à calculer un taux de changement de pression dans le cylindre qui est une quantité d'augmentation d'une pression dans le cylindre par unité de temps ou unité d'angle de vilebrequin sur la base de chaque pression dans le cylindre qui est acquise par les moyens d'acquisition de pression dans le cylindre (40, 50) dans une période de combustion pendant un cycle ;
des moyens de calcul de valeur intégrée (S110 à S130, 50) destinés à calculer une valeur intégrée en intégrant des taux de changement de pression dans le cylindre qui sont égaux ou supérieurs à une valeur de seuil de bruit qui est égale ou supérieure à 0 ou est une valeur négative proche de 0 par rapport à chaque taux de changement de pression dans le cylindre qui est calculé par les moyens de calcul de taux de changement de pression dans le cylindre (S100, 50) ; et
des moyens de commande de suppression de bruit de combustion (50) destinés à exécuter une commande qui supprime le bruit de combustion sur la base d'une valeur intégrée qui est calculée par les moyens de calcul de valeur intégrée (S110 à S130, 50).

2. Dispositif de commande pour un moteur à combustion interne (10) selon la revendication 1, dans lequel la valeur de seuil de bruit est plus grande que 0.

3. Dispositif de commande pour un moteur à combustion interne (10) selon la revendication 1 ou 2, comportant en outre :
des moyens d'injection à plusieurs étages (50) destinés à diviser une quantité totale d'injection de carburant qu'une soupape d'injection de carburant (28) est amenée à injecter pendant un cycle en au moins une quantité injectée par une injection principale et une quantité injectée par une injection pilote qui est avant l'injection principale ;
dans lequel les moyens de calcul de valeur intégrée (S110 à S130, 50) comprennent :
des moyens de calcul de première valeur intégrée (S200, S300, 50) destinés à calculer une première valeur intégrée qui est obtenue, par rapport à chaque taux de changement de pression dans le cylindre qui est calculé par les moyens de calcul de taux de changement de pression dans le cylindre (S100, 50) dans une période de combustion correspondant à l'injection pilote, en intégrant des taux de changement de pression dans le cylindre qui sont égaux ou supérieurs à la valeur de seuil de bruit ; et
des moyens de calcul de deuxième valeur intégrée (S210, S310, 50) destinés à calculer une deuxième valeur intégrée qui est obtenue, par rapport à chaque taux de changement de pression dans le cylindre qui est calculé par les moyens de calcul de taux de changement de pression dans le cylindre (S100, 50) dans une période de combustion correspondant à l'injection principale, en intégrant des taux de changement de pression dans le cylindre qui sont égaux ou supérieurs à la valeur de seuil de bruit.

4. Dispositif de commande pour un moteur à combustion interne (10) selon la revendication 3, dans lequel les moyens de commande de suppression de bruit de combustion (50) comprennent des moyens de réduction de proportion d'injection pilote (S220, S240, S250, 50) destinés, dans un cas où la première valeur intégrée est plus grande que la deuxième valeur intégrée, à réduire une proportion de partage d'injection de l'injection pilote par les moyens d'injection à plusieurs étages dans des cycles ultérieurs.

5. Dispositif de commande pour un moteur à combustion interne (10) selon la revendication 3 ou 4, dans lequel les moyens de commande de suppression de bruit de combustion (50) comprennent des moyens d'augmentation de proportion d'injection pilote (S220, S240, S260, 50) destinés, dans un cas où la première valeur intégrée est inférieure ou égale à la deuxième valeur intégrée, à augmenter une proportion de partage d'injection de l'injection pilote par les moyens d'injection à plusieurs étages (50) dans des cycles ultérieurs.

6. Dispositif de commande pour un moteur à combustion interne (10) selon la revendication 3, dans lequel les moyens de commande de suppression de bruit de combustion (50) comprennent :
des moyens de réduction de pression de carburant (S220, S230, 50) destinés à réduire une pression de carburant qui est délivré à la soupape d'injection de carburant dans un cas où une condition de détermination est établie quand la première valeur intégrée est plus grande qu'une première valeur de seuil et la deuxième valeur intégrée est plus grande qu'une deuxième valeur de seuil ;
des moyens de réduction de proportion d'injection pilote (S220, S240, S250, 50) destinés, dans un cas où la condition de détermination n'est pas établie et la première valeur intégrée est plus grande que la deuxième valeur intégrée, à réduire une proportion de partage d'injection de l'injection pilote par les moyens d'injection à plusieurs étages (50) dans des cycles ultérieurs ; et
des moyens d'augmentation de proportion d'injection pilote (S220, S240, S260, 50) destinés, dans un cas où la condition de détermination n'est pas établie et la première valeur intégrée est inférieure ou égale à la deuxième valeur intégrée, à augmenter une proportion de partage d'injection de l'injection pilote par les moyens d'injection à plusieurs étages (50) dans des cycles ultérieurs.

7. Dispositif de commande pour un moteur à combustion interne (10) selon la revendication 3, dans lequel les moyens de commande de suppression de bruit de combustion (50) comprennent :
des moyens de réduction de proportion d'injection pilote (S320, S330, S350, 50) destinés, dans un cas où la première valeur intégrée est plus grande qu'une première valeur de seuil et la deuxième valeur intégrée est inférieure ou égale à une deuxième valeur de seuil, à réduire une proportion de partage d'injection de l'injection pilote par les moyens d'injection à plusieurs étages (50) dans des cycles ultérieurs.

8. Dispositif de commande pour un moteur à combustion interne (10) selon la revendication 3 ou 7, dans lequel les moyens de commande de suppression de bruit de combustion (50) comprennent :
des moyens d'augmentation de proportion d'injection pilote (S320, S360, S370, 50) destinés, dans un cas où la première valeur intégrée est inférieure ou égale à une première valeur de seuil et la deuxième valeur intégrée est plus grande qu'une deuxième valeur de seuil, à augmenter une proportion de partage d'injection de l'injection pilote par les moyens d'injection à plusieurs étages (50) dans des cycles ultérieurs.

9. Dispositif de commande pour un moteur à combustion interne (10) selon la revendication 3, dans lequel les moyens de commande de suppression de bruit de combustion (50) comprennent :
des moyens de réduction de pression de carburant (S320 à S340, 50) destinés, dans un cas où la première valeur intégrée est plus grande qu'une première valeur de seuil et la deuxième valeur intégrée est plus grande qu'une deuxième valeur de seuil, à réduire une pression du carburant qui est délivré à la soupape d'injection de carburant (28) ;
des moyens de réduction de proportion d'injection pilote (S320, S330, S350, 50) destinés, dans un cas où la première valeur intégrée est plus grande que la première valeur de seuil et la deuxième valeur intégrée est inférieure ou égale à la deuxième valeur de seuil, à réduire une proportion de partage d'injection de l'injection pilote par les moyens d'injection à plusieurs étages dans des cycles ultérieurs ; et
des moyens d'augmentation de proportion d'injection pilote (S320, S360, S370, 50) destinés, dans un cas où la première valeur intégrée est inférieure ou égale à la première valeur de seuil et la deuxième valeur intégrée est plus grande que la deuxième valeur de seuil, à augmenter une proportion de partage d'injection de l'injection pilote par les moyens d'injection à plusieurs étages dans des cycles ultérieurs.

10. Dispositif de commande pour un moteur à combustion interne selon l'une quelconque des revendications 3 à 9, comportant en outre :
des moyens de détermination (S400, 50) destinés à déterminer qu'une condition de détermination est établie dans un cas où un taux de changement de pression dans le cylindre qui est calculé par les moyens de calcul de taux de changement de pression dans le cylindre (S100, 50) change en une valeur positive après être devenu une valeur négative dans une période de combustion pendant un cycle ;
dans lequel :
dans un cas où la condition de détermination n'est pas établie, les moyens de calcul de première valeur intégrée (S420, S440 à S480, 50) calculent la première valeur intégrée en prenant une période depuis un temps de début de combustion jusqu'à un premier point d'inflexion comme période de combustion qui correspond à l'injection pilote ; et
dans un cas où la condition de détermination n'est pas établie, les moyens de calcul de deuxième valeur intégrée (S420, S440, S490 à S520, 50) calculent la deuxième valeur intégrée en prenant une période depuis le premier point d'inflexion jusqu'à un temps de fin de combustion comme période de combustion qui correspond à l'injection principale.
